# EUROPEAN PATENT APPLICATION

(11) **EP 4 418 567 A1**
(43) Date of publication of application: **21.08.2024**
(21) Application number: 24151269.8
(22) Date of filing: 11.01.2024
(51) Int. Cl.: H04B 7/185

(54) **METHODS, APPARATUSES AND SYSTEMS FOR MULTI-RTT POSITIONING IN NON-TERRESTRIAL NETWORK**

(30) Priority: 14.02.2023 FI 20235146
(71) Applicant: Nokia Technologies Oy, 02610 Espoo (FI)
(72) Inventor: WIGARD, Jeroen, Klarup (DK); FREDERIKSEN, Frank, Klarup (DK); JUAN, Enric, Aalborg (DK)
(74) Representative: Nokia EPO representatives

(57) **Abstract**

Described herein is a user equipment, UE, served by a serving network node and configured for supporting multi-round trip time, RTT, -based positioning over non-terrestrial network, NTN, which involves the serving network node, at least one further network node relevant for the multi-RTT-based positioning and a location management function, LMF, the UE comprising: at least one processor; and at least one memory storing instructions that, when executed by the at least one processor, cause the UE at least to: receive, from the LMF via the serving network node, assistance information for supporting the multi-RTT-based positioning, wherein the assistance information comprises ephemeris information related to the serving network node and to the further network node relevant for the multi-RTT-based positioning; determine, based on the received assistance information, measurement gap for performing the multi-RTT related measurement; and perform the multi-RTT related measurement for the serving network node and the further network node in accordance with the determined measurement gap and preferably report a result thereof to the LMF.

## Description

### TECHNOLOGY

The present disclosure relates to Non-Terrestrial Network (NTN), in particular to methods, apparatuses, and systems for supporting positioning in NTNs.

### BACKGROUND

Any discussion of the background art throughout the specification should in no way be considered as an admission that such art is widely known or forms part of common general knowledge in the field.

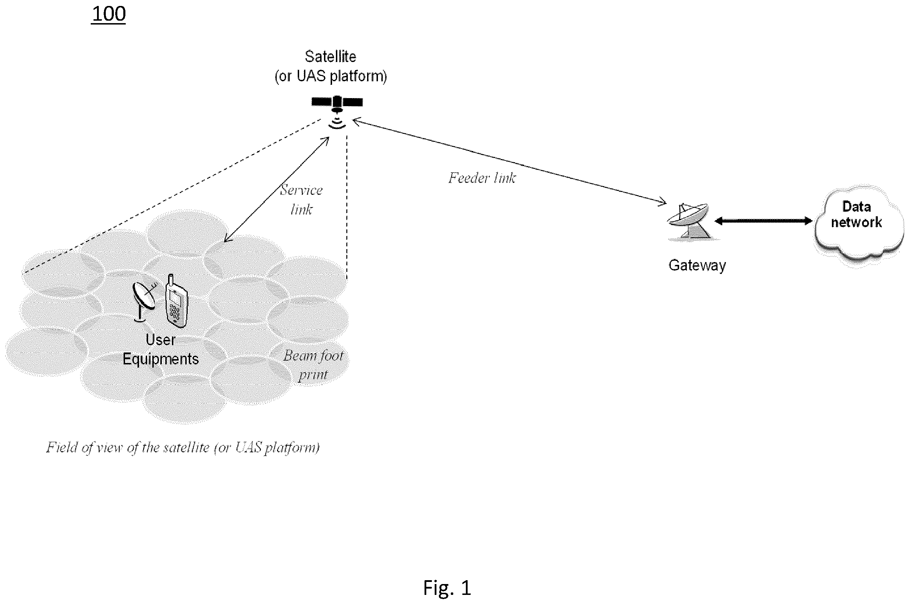

Recently, support for Non-Terrestrial Networks (NTN) has been discussed, for example by the 3rd Generation Partnership Project (3GPP). For instance, the feasibility of using 5G New Radio (NR) standards to support NTNs has been studied during 3GPP Releases 15 and 16. In some possible cases, it may be assumed that the UEs supporting NTN would have Global Navigation Satellite System (GNSS) capability. In an NTN based system, 5G base stations (e.g., gNBs or the like) may be deployed on board satellites to provide communication coverage over a very large area that may be otherwise unreachable by (traditional) cellular networks. This may be used for example to connect Internet of Things (IoT) devices globally as well as to provide personal communication in remote areas and also in disaster relief. Figure 1 schematically shows a possible example of a general NTN deployment scenario 100. In a broad sense, it may be understood that, in some possible implementations, the data network (including the gNB) may be located on the ground (e.g., in a so-called "transparent payload" architecture) and connect to an NTN gateway that via a feeder link connects to the NTN payload (e.g., a suitable network node onboard a satellite). The NTN payload may connect to the UE via a service link. Other details related to such NTN deployment are not to be described here, for the sake of conciseness.

Broadly speaking, there may be different types of satellite orbits that have been studied for NR access, such as Low Earth Orbit (LEO) satellites which may typically orbit at approximately 600 km above the earth. During recent studies, the typical beam footprint size for an LEO satellite has been assumed to be between 100-1000 km radius. As a result, one LEO satellite can cover a very large area on the earth which may include multiple countries.

In some other recent studies, the topic of network verified UE location has been introduced with the goal of the network being able to verify that the UE was at the location it is claiming to be with a certain degree of accuracy. Therein, multi-Round Trip Time (RTT) -based techniques have been studied with multiple satellites being proposed to be used, which would appear to provide extra information for speeding up the estimation.

However, it is to be noted that in NTN the network transmission points are typically moving, which generally means that timings between different gNBs as well as between gNB and UE would be drifting. While the UE may in theory have a good understanding of the time of the serving cell, the understanding of further neighboring satellites may be missing. At the same time, this (satellite) movement might also lead to potentially large Doppler shift (and Doppler drift when observing over longer time durations), which may in turn lead to the necessity of having measurement gaps for receiving data from cells on neighboring satellites. As a result, there appear to exist various challenges for multi-RTT techniques with multiple satellites involved, as the UE would generally not know where to search and also would not have corresponding measurement gaps to search (note that it is generally not safe to assume that the UE would be able to measure on a neighboring satellite when performing operations towards the current serving satellite).

Therefore, in view of at least some or all of the issues discussed above, there appears to exist a need to propose new mechanisms/techniques for use in supporting positioning (e.g., multi-RTT-based positioning) in NTN, particularly in an efficient, flexible yet reliable manner.

### SUMMARY

In accordance with an aspect of the present disclosure, there is provided a user equipment (UE) served by a serving network node and configured for supporting multi-round trip time (RTT) -based positioning over non-terrestrial network (NTN) which involves the serving network node, at least one further network node relevant for the multi-RTT-based positioning and a location management function (LMF), the UE comprising:
at least one processor; and
at least one memory storing instructions that, when executed by the at least one processor, cause the UE at least to:
   receive, from the LMF via the serving network node, assistance information for supporting the multi-RTT-based positioning, wherein the assistance information comprises ephemeris information related to the serving network node and to the further network node relevant for the multi-RTT-based positioning;
   determine, based on the received assistance information, measurement gap for performing the multi-RTT related measurement; and
   perform the multi-RTT related measurement for the serving network node and the further network node in accordance with the determined measurement gap and preferably report a result thereof to the LMF.

In some examples, the assistance information further comprises measurement gap related configuration, and the measurement gap for performing the multi-RTT related measurement is determined based on the measurement gap related configuration.

In some examples, the assistance information further comprises information indicative of time-wise development of the assistance information or part thereof.

In some examples, the information indicative of time-wise development of the assistance information or part thereof comprises a plurality of measurement gap related configurations resulting from time-wise satellite movement and/or feeder link changes associated with the serving network node and/or the further network node.

In some examples, the assistance information further comprises timing information indicative of a sequence of time instances at which the multi-RTT related measurement is to be expected to be performed by the UE.

In some examples, the assistance information further comprises information related to position reference signal (PRS) for the multi-RTT related measurement.

In some examples, the UE is further caused to:
determine a Doppler shift of the further network node based on the ephemeris information of the assistance information; and
the measurement gap for performing multi-RTT related measurement is determined further based on the determined Doppler shift of the further network node.

In some examples, the assistance information is sent from the LMF in a location positioning protocol (LPP) message.

In accordance with another aspect of the present disclosure, there is provided a location management function (LMF) configured for supporting multi-round trip time (RTT) -based positioning over non-terrestrial network (NTN) which involves a serving network node serving a user equipment, UE and at least one further network node relevant for the multi-RTT-based positioning, the LMF comprising:
at least one processor; and
at least one memory storing instructions that, when executed by the at least one processor, cause the LMF at least to:
   determine assistance information for supporting the multi-RTT-based positioning, wherein the assistance information comprises ephemeris information related to the serving network node and to the further network node relevant for the multi-RTT-based positioning; and
   send the assistance information to the UE via the serving network node.

In some examples, the assistance information further comprises at least one of:
measurement gap related configuration for the UE to perform multi-RTT related measurement,
timing information indicative of a sequence of time instances at which the multi-RTT related measurement is to be expected to be performed by the UE,
information related to position reference signal, PRS, for the multi-RTT related measurement, or
information indicative of time-wise development of the assistance information or part thereof.

In some examples, the assistance information is sent from the LMF in a location positioning protocol (LPP) message.

In accordance with yet another aspect of the present disclosure, there is provided a method of a user equipment (UE) served by a serving network node and configured for supporting multi-round trip time (RTT) -based positioning over non-terrestrial network (NTN) which involves the serving network node, at least one further network node relevant for the multi-RTT-based positioning and a location management function (LMF), the method comprising:
receiving, from the LMF via the serving network node, assistance information for supporting the multi-RTT-based positioning, wherein the assistance information comprises ephemeris information related to the serving network node and to the further network node relevant for the multi-RTT-based positioning;
determining, based on the received assistance information, measurement gap for performing multi-RTT related measurement; and
performing the multi-RTT related measurement for the serving network node and the further network node in accordance with the determined measurement gap and preferably reporting a result thereof to the LMF.

In accordance with yet another aspect of the present disclosure, there is provided a method of a location management function (LMF) configured for supporting multi-round trip time (RTT) -based positioning over non-terrestrial network (NTN) which involves a serving network node serving a user equipment, UE and at least one further network node relevant for the multi-RTT-based positioning, the method comprising:
determining assistance information for supporting the multi-RTT-based positioning, wherein the assistance information comprises ephemeris information related to the serving network node and to the further network node relevant for the multi-RTT-based positioning; and
sending the assistance information to the UE via the serving network node.

In accordance with yet another aspect of the present disclosure, there is provided a computer program comprising instructions for causing an apparatus to perform the method as disclosed in the present disclosure. The apparatus may be the UE and the method may be the method of the UE; or the apparatus may be the LMF and the method may be the method of the LMF.

In accordance with a further aspect of the present disclosure, there is also provided a memory storing computer readable instructions for causing an apparatus to perform the method as disclosed in the present disclosure. The apparatus may be the UE and the method may be the method of the UE; or the apparatus may be the LMF and the method may be the method of the LMF.

Furthermore, according to some example embodiments, there is provided a user equipment (UE) served by a serving network node and configured for supporting multi-round trip time (RTT) -based positioning over non-terrestrial network (NTN) which involves the serving network node, at least one further network node relevant for the multi-RTT-based positioning and a location management function (LMF), the UE comprising respective suitable means configured for performing the respective steps as disclosed in the present disclosure.

Similarly, according to some example embodiments, there is also provided a location management function (LMF) configured for supporting multi-round trip time (RTT) -based positioning over non-terrestrial network (NTN) which involves a serving network node serving a user equipment, UE and at least one further network node relevant for the multi-RTT-based positioning, the LMF comprising respective suitable means configured for performing the respective steps as disclosed in the present disclosure.

In addition, according to some other example embodiments, there is provided, for example, a computer program product for a wireless communication device comprising at least one processor, including software code portions for performing the respective steps disclosed in the present disclosure, when said product is run on the device. The computer program product may include a computer-readable medium on which said software code portions are stored. Furthermore, the computer program product may be directly loadable into the internal memory of the computer and/or transmittable via a network by means of at least one of upload, download and push procedures.

While some example embodiments will be described herein with particular reference to the above application, it will be appreciated that the present disclosure is not limited to such a field of use, and is applicable in broader contexts.

Notably, it is understood that methods according to the present disclosure relate to methods of operating the apparatuses (or systems) according to the above example embodiments and variations thereof, and that respective statements made with regard to the apparatuses (or systems) likewise apply to the corresponding methods, and vice versa, such that similar description may be omitted for the sake of conciseness. In addition, the above aspects may be combined in many ways, even if not explicitly disclosed. The skilled person will understand that these combinations of aspects and features/steps are possible unless it creates a contradiction which is explicitly excluded.

Implementations of the disclosed apparatuses may include using, but not limited to, one or more processor, one or more application specific integrated circuit (ASIC) and/or one or more field programmable gate array (FPGA). Implementations of the apparatus may also include using other conventional and/or customized hardware such as software programmable processors, such as graphics processing unit (GPU) processors.

Other and further example embodiments of the present disclosure will become apparent during the course of the following discussion and by reference to the accompanying drawings.

### BRIEF DESCRIPTION OF THE DRAWINGS

Example embodiments of the disclosure will now be described, by way of example only, with reference to the accompanying drawings in which:
Figure 1 schematically illustrates an example system deployment of a Non-Terrestrial Network (NTN) system;
Figure 2 schematically illustrates an example diagram of a multi-Round Trip Time (RTT) based positioning technique;
Figure 3 schematically illustrates an example signaling/messaging flowchart of the multi-RTT-based positioning technique;
Figure 4 schematically illustrates an example flow chart of UE behaviors according to some example embodiments of the present disclosure; and
Figure 5 schematically illustrates an example of an implementation of an apparatus according to some example embodiments of the present disclosure.

### DESCRIPTION OF EXAMPLE EMBODIMENTS

Notably, identical or like reference numbers used in the figures of the present disclosure may, unless indicated otherwise, indicate identical or like elements. Similarly, identical or like messages (as well as the contents comprised therein) used in the figures of the present disclosure may, unless indicated otherwise, indicate identical or like messages (and the contents therein), such that repeated description thereof may be omitted for reasons of conciseness.

In the following, different exemplifying embodiments will be described using, as an example of a communication network to which examples of embodiments may be applied, a communication network architecture based on 3GPP standards for a communication network, such as a 5G/NR/IoT, without restricting the embodiments to such an architecture, however. It is apparent for a person skilled in the art that the embodiments may also be applied to other kinds of communication networks where mobile communication principles are integrated with a D2D (device-to-device) or V2X (vehicle to everything) configuration, such as SL (side link), e.g. Wi-Fi, worldwide interoperability for microwave access (WiMAX), Bluetooth^{®}, personal communications services (PCS), ZigBee^{®}, wideband code division multiple access (WCDMA), systems using ultra-wideband (UWB) technology, mobile ad-hoc networks (MANETs), wired access, etc. Furthermore, without loss of generality, the description of some examples of embodiments is related to a mobile communication network, but principles of the disclosure can be extended and applied to any other type of communication network, such as a wired communication network.

The following examples and embodiments are to be understood only as illustrative examples. Although the specification may refer to "an", "one", or "some" example(s) or embodiment(s) in several locations, this does not necessarily mean that each such reference is related to the same example(s) or embodiment(s), or that the feature only applies to a single example or embodiment. Single features of different embodiments may also be combined to provide other embodiments. Furthermore, terms like "comprising" and "including" should be understood as not limiting the described embodiments to consist of only those features that have been mentioned; such examples and embodiments may also contain features, structures, units, modules, etc., that have not been specifically mentioned.

A basic system architecture of a (tele)communication network including a mobile communication system where some examples of embodiments are applicable may include an architecture of one or more communication networks including wireless access network subsystem(s) and core network(s). Such an architecture may include one or more communication network control elements or functions, access network elements, radio access network elements, access service network gateways or base transceiver stations, such as a base station (BS), an access point (AP), a NodeB (NB), an eNB or a gNB, a distributed unit (DU) or a centralized/central unit (CU), which controls a respective coverage area or cell(s) and with which one or more communication stations such as communication elements or functions, like user devices or terminal devices, like a user equipment (UE), or another device having a similar function, such as a modem chipset, a chip, a module etc., which can also be part of a station, an element, a function or an application capable of conducting a communication, such as a UE, an element or function usable in a machine-to-machine communication architecture, or attached as a separate element to such an element, function or application capable of conducting a communication, or the like, are capable to communicate via one or more channels via one or more communication beams for transmitting several types of data in a plurality of access domains. Furthermore, core network elements or network functions, such as gateway network elements/functions, mobility management entities, a mobile switching center, servers, databases and the like may be included.

The following description may provide further details of alternatives, modifications and variances: a gNB comprises e.g., a node providing NR user plane and control plane protocol terminations towards the UE, and connected via the NG interface to the 5GC, e.g., according to 3GPP TS 38.300 V16.6.0 (2021-06) section 3.2 incorporated by reference.

A gNB Central Unit (gNB-CU) comprises e.g., a logical node hosting e.g., RRC, SDAP and PDCP protocols of the gNB or RRC and PDCP protocols of the en-gNB that controls the operation of one or more gNB-DUs. The gNB-CU terminates the F1 interface connected with the gNB-DU.

A gNB Distributed Unit (gNB-DU) comprises e.g., a logical node hosting e.g., RLC, MAC and PHY layers of the gNB or en-gNB, and its operation is partly controlled by the gNB-CU. One gNB-DU supports one or multiple cells. One cell is supported by only one gNB-DU. The gNB-DU terminates the F 1 interface connected with the gNB-CU.

A gNB-CU-Control Plane (gNB-CU-CP) comprises e.g., a logical node hosting e.g., the RRC and the control plane part of the PDCP protocol of the gNB-CU for an en-gNB or a gNB. The gNB-CU-CP terminates the E1 interface connected with the gNB-CU-UP and the F1-C interface connected with the gNB-DU.

A gNB-CU-User Plane (gNB-CU-UP) comprises e.g., a logical node hosting e.g., the user plane part of the PDCP protocol of the gNB-CU for an en-gNB, and the user plane part of the PDCP protocol and the SDAP protocol of the gNB-CU for a gNB. The gNB-CU-UP terminates the E1 interface connected with the gNB-CU-CP and the F1-U interface connected with the gNB-DU, e.g., according to 3GPP TS 38.401 V16.6.0 (2021-07) section 3.1 incorporated by reference.

Different functional splits between the central and distributed unit are possible, e.g., called options:
Option 1 (1A-like split):
   ∘ The function split in this option is similar to the 1A architecture in DC. RRC is in the central unit. PDCP, RLC, MAC, physical layer and RF are in the distributed unit.
Option 2 (3C-like split):
   ∘ The function split in this option is similar to the 3C architecture in DC. RRC and PDCP are in the central unit. RLC, MAC, physical layer and RF are in the distributed unit.
Option 3 (intra RLC split):
   ∘ Low RLC (partial function of RLC), MAC, physical layer and RF are in the distributed unit. PDCP and high RLC (the other partial function of RLC) are in the central unit.
Option 4 (RLC-MAC split):
   ∘ MAC, physical layer and RF are in the distributed unit. PDCP and RLC are in the central unit.
   Or else, e.g., according to 3GPP TR 38.801 V14.0.0 (2017-03) section 11 incorporated by reference.

A gNB supports different protocol layers, e.g., Layer 1 (L1) - physical layer.

The layer 2 (L2) of NR is split into the following sublayers: Medium Access Control (MAC), Radio Link Control (RLC), Packet Data Convergence Protocol (PDCP) and Service Data Adaptation Protocol (SDAP), where e.g.:
∘ The physical layer offers to the MAC sublayer transport channels;
∘ The MAC sublayer offers to the RLC sublayer logical channels;
∘ The RLC sublayer offers to the PDCP sublayer RLC channels;
∘ The PDCP sublayer offers to the SDAP sublayer radio bearers;
∘ The SDAP sublayer offers to 5GC QoS flows;
∘ Comp. refers to header compression and Segm. To segmentation;
∘ Control channels include (BCCH, PCCH).

Layer 3 (L3) includes e.g., Radio Resource Control (RRC), e.g., according to 3GPP TS 38.300 V16.6.0 (2021-06) section 6 incorporated by reference.

A RAN (Radio Access Network) node or network node like e.g. a gNB, base station, gNB CU or gNB DU or parts thereof may be implemented using e.g. an apparatus with at least one processor and/or at least one memory (with computer-readable instructions (computer program)) configured to support and/or provision and/or process CU and/or DU related functionality and/or features, and/or at least one protocol (sub-layer of a RAN (Radio Access Network), e.g. layer 2 and/or layer 3.

The gNB CU and gNB DU parts may e.g., be co-located or physically separated. The gNB DU may even be split further, e.g., into two parts, e.g., one including processing equipment and one including an antenna. A Central Unit (CU) may also be called BBU/REC/RCC/C-RAN/V-RAN, O-RAN, or part thereof. A Distributed Unit (DU) may also be called RRH/RRU/RE/RU, or part thereof. Hereinafter, in various example embodiments of the present disclosure, the CU-CP (or more generically, the CU) may also be referred to as a (first) network node that supports at least one of central unit control plane functionality or a layer 3 protocol of a radio access network; and similarly, the DU may be referred to as a (second) network node that supports at least one of distributed unit functionality or the layer 2 protocol of the radio access network.

A gNB-DU supports one or multiple cells, and could thus serve as e.g., a serving cell for a user equipment (UE).

A user equipment (UE) may include a wireless or mobile device, an apparatus with a radio interface to interact with a RAN (Radio Access Network), a smartphone, an in-vehicle apparatus, an IoT device, a M2M device, or else. Such UE or apparatus may comprise: at least one processor; and at least one memory including computer program code; wherein the at least one memory and the computer program code are configured to, with the at least one processor, cause the apparatus at least to perform certain operations, like e.g. RRC connection to the RAN. A UE is e.g., configured to generate a message (e.g., including a cell ID) to be transmitted via radio towards a RAN (e.g., to reach and communicate with a serving cell). A UE may generate and transmit and receive RRC messages containing one or more RRC PDUs (Packet Data Units).

The UE may have different states (e.g., according to 3GPP TS 38.331 V16.5.0 (2021-06) sections 42.1 and 4.4, incorporated by reference).

A UE is e.g., either in RRC_CONNECTED state or in RRC_INACTIVE state when an RRC connection has been established.

In RRC _CONNECTED state a UE may:
∘ store the AS context;
∘ transfer unicast data to/from the UE;
∘ monitor control channels associated with the shared data channel to determine if data is scheduled for the data channel;
∘ provide channel quality and feedback information;
∘ perform neighbouring cell measurements and measurement reporting.

The RRC protocol includes e.g. the following main functions:
∘ RRC connection control;
∘ measurement configuration and reporting;
∘ establishment/modification/release of measurement configuration (e.g. intra-frequency, inter-frequency and inter-RAT measurements);
∘ setup and release of measurement gaps;
∘ measurement reporting.

The general functions and interconnections of the described elements and functions, which also depend on the actual network type, are known to those skilled in the art and described in corresponding specifications, so that a detailed description thereof may omitted herein for the sake of conciseness. However, it is to be noted that several additional network elements and signaling links may be employed for a communication to or from an element, function or application, like a communication endpoint, a communication network control element, such as a server, a gateway, a radio network controller, and other elements of the same or other communication networks besides those described in detail herein below.

A communication network architecture as being considered in examples of embodiments may also be able to communicate with other networks, such as a public switched telephone network or the Internet. The communication network may also be able to support the usage of cloud services for virtual network elements or functions thereof, wherein it is to be noted that the virtual network part of the telecommunication network can also be provided by non-cloud resources, e.g., an internal network or the like. It should be appreciated that network elements of an access system, of a core network etc., and/or respective functionalities may be implemented by using any node, host, server, access node or entity etc. being suitable for such a usage. Generally, a network function can be implemented either as a network element on a dedicated hardware, as a software instance running on a dedicated hardware, or as a virtualized function instantiated on an appropriate platform, e.g., a cloud infrastructure.

Furthermore, a network element, such as communication elements, like a UE, a terminal device, control elements or functions, such as access network elements, like a base station / BS, a gNB, a radio network controller, a core network control element or function, such as a gateway element, or other network elements or functions, as described herein, and any other elements, functions or applications may be implemented by software, e.g., by a computer program product for a computer, and/or by hardware. For executing their respective processing, correspondingly used devices, nodes, functions or network elements may include several means, modules, units, components, etc. (not shown) which are required for control, processing and/or communication/signaling functionality. Such means, modules, units and components may include, for example, one or more processors or processor units including one or more processing portions for executing instructions and/or programs and/or for processing data, storage or memory units or means for storing instructions, programs and/or data, for serving as a work area of the processor or processing portion and the like (e.g. ROM, RAM, EEPROM, and the like), input or interface means for inputting data and instructions by software (e.g. floppy disc, CD-ROM, EEPROM, and the like), a user interface for providing monitor and manipulation possibilities to a user (e.g. a screen, a keyboard and the like), other interface or means for establishing links and/or connections under the control of the processor unit or portion (e.g. wired and wireless interface means, radio interface means including e.g. an antenna unit or the like, means for forming a radio communication part etc.) and the like, wherein respective means forming an interface, such as a radio communication part, can be also located on a remote site (e.g. a radio head or a radio station etc.). It is to be noted that in the present specification processing portions should not be only considered to represent physical portions of one or more processors, but may also be considered as a logical division of the referred processing tasks performed by one or more processors. It should be appreciated that according to some examples, a so-called "liquid" or flexible network concept may be employed where the operations and functionalities of a network element, a network function, or of another entity of the network, may be performed in different entities or functions, such as in a node, host or server, in a flexible manner. In other words, a "division of labor" between involved network elements, functions or entities may vary case by case.

Yet further, regarding NTN, in a broad sense, it may imply that a user equipment (UE) or user node is communicating with the network (and potentially internet) via a satellite or high altitude platform. In some possible implementations, NTN may be considered to comprise one or more base stations, represented by a gNB or the like. The gNB may be mounted on board an airborne vehicle, a spaceborne vehicle, or the like. The spaceborne vehicle may comprise, for example, a satellite in a low earth orbit (LEO), a medium earth orbit (MEO), a geostationary earth orbit (GEO) or in a highly elliptical orbit (HEO), etc. A satellite comprising a base station may also be referred to as a communications satellite, for example. The communications satellite may be implemented as a regenerative (with on board processing by the gNB) payload. The gNB on board the satellite may be configured to generate several beams over a given service area bounded by its field of view. Footprints of the beams may refer to the ground area that transponders of the communications satellite offer cell coverage. A cell coverage may refer to a geographical area covered by a network. The field of view of the satellite may depend on an on board antenna diagram and a minimum elevation angle. The NTN may further comprise other base station(s) such as one or more gNBs located on the ground-level. In such cases, the satellite may be understood to operate in a kind of amplify-and-forward / relay mode. The NTN may also comprise one or more client nodes, which may be also referred to as user nodes (or UE). For example, the network may comprise a UE. The UE may be a terrestrial UE located at a ground level. A UE may comprise, for example, a mobile phone or a IoT device.

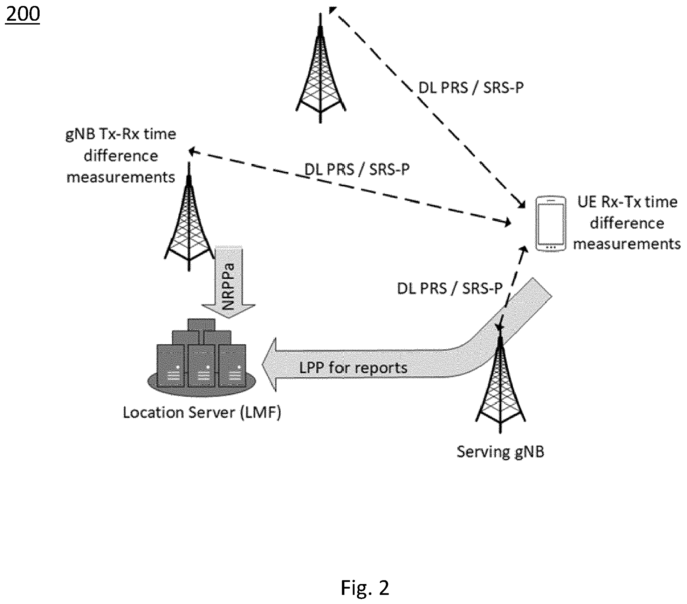

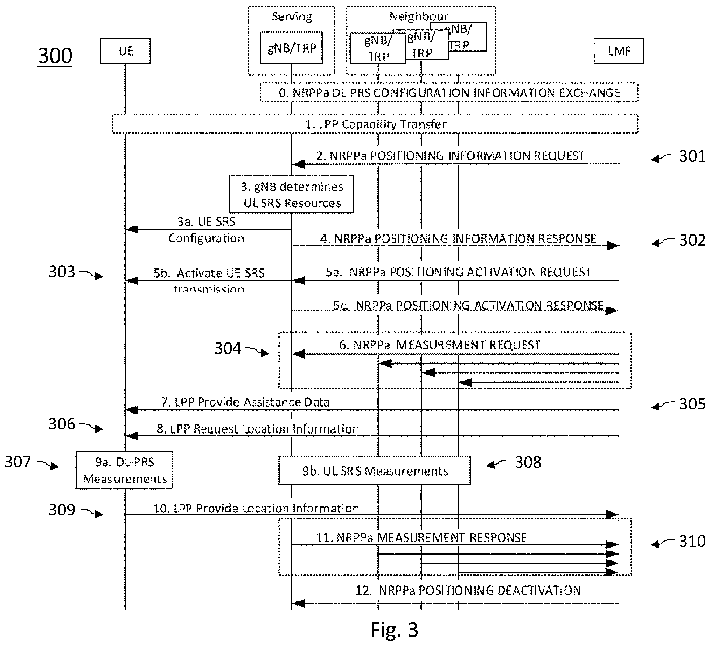

Before going into detail about the example embodiments of the present disclosure, it may be worthwhile to, with reference to Figures 2 and 3, briefly go through some exemplary general aspects of the multi-RTT-based positioning techniques that may be considered useful for understanding the present disclosure. In a broad sense, RTT may be understood as a timing-based positioning technique involving both downlink (DL) and uplink (UL) signals and measurements, and is generally considered to suffer from synchronization offset errors. It is to be noted that Figures 2 and 3 generally illustrate the way how multi-RTT positioning works for (traditional) terrestrial networks. However, as will be understood and appreciated by the skilled person, for NTN-based deployment, this would most likely have to be adapted or enhanced such that RTT can be measured by the same gNB (satellite) at different points in time so that the satellite's movement over time would be able to create measurement samples where the satellite's new position at different observation times would create different "location samples". Notably, if multiple satellites are available, such multiple satellites could also be measured and potentially "sampled" as a function of time to enhance the accuracy of the estimate and to reduce the UE location estimation process. Hereinafter in the example embodiments of the present disclosure, it is generally assumed that the multi-RTT-based techniques typically involve at least the serving cell/node (satellite) and at least one (in some possible implementations, at least two, for further improved accuracy) further cell/node (satellite) that is considered to be relevant for such multi-RTT-based techniques. It is also to be noted that, such relevant cell/node may sometimes also be simply referred to as a "neighbor" or "neighboring" cell/node. However, it may be worth mentioning that, in such multi-RTT-based techniques, the term "neighbor" or "neighboring" should not be understood to be limited to physical distance (neighbor), but rather be understood to refer to the cell(s)/node(s) that is/are considered relevant for performing the multi-RTT-based measurement or positioning techniques. For instance, the relevant cell(s)/node(s) involved in a certain multi-RTT-based measurement or positioning process may be determined (e.g., selected) by the LMF or any other suitable network node/functionality in the system, as can be well understood and appreciated by the skilled person.

To be more specific, as schematically shown in Figure 2, a typical multi-RTT based positioning setup 200 may be seen to comprise (among other possible network node/element/functionality not explicitly shown in the figure) the UE in question, the serving network node (e.g., gNB), at least one (or preferably two further (e.g., neighboring) network nodes / gNBs that are considered to be relevant or involved in said multi-RTT positioning process), and finally, a Location Management Function (LMF, or sometimes also simply referred to as location server).

In particular, in a first step, the network nodes (including the serving gNBs as well as the other two relevant (e.g., neighboring) gNBs) may each be configured to transmit DL Positioning Reference Signal (PRS) to the UE; while the UE may be configured to transmit UL Sounding Reference Signal for Positioning (SRS-P) to the gNBs. Subsequently, the UE may be configured to measure the UE Rx-Tx time difference per gNB and report the corresponding UE Rx-Tx measurements to the LMF. Similarly, Each gNB may also be configured to measure respective gNB Rx-Tx time difference and report such measurements to the LMF as well. Finally, the LMF may be configured to, based on the received measurement reports from the UE as well as from the gNBs, estimate the RTT to gNBs and accordingly also the UE positioning.

Reference is now made to Figure 3, which schematically illustrates a high-level example signaling/messaging flowchart 300 for the multi-RTT-based positioning technique as illustrated above with reference to Figure 2. As noted above, this example flow chart generally illustrates the multi-RTT positioning technique for (traditional/conventional) terrestrial networks. As a result and for the sake of conciseness, only a subset of the complete signaling/messaging exchanges will be described here. The rest may be self-explanatory or could be understood and appreciated by the skilled person, for example by referring to respective specifications/standards (e.g., 3GPP TR 38.305 or the like).

Particularly, in step 301 the LMF may be configured to send a message to the serving gNB to request UL information for the target device (UE). Accordingly, in step 302 the serving gNB may be configured to provide the UL-SRS configuration information to the LMF. The LMF may also request (step 303) activation of UE SRS transmission to the serving gNB, and correspondingly the target device / UE may be configured to begin the UL-SRS transmission according to the time domain behavior of UL-SRS resource configuration. In some possible cases, the LMF may also be configured to provide the UL information to the selected gNB(s) (step 304), if necessary. Moreover, the LMF may be configured to send to the target UE any required assistance data to perform the necessary DL-PRS measurements (step 305); and additionally to request the UE to perform the corresponding multi-RTT measurements (step 306). Then, as exemplarily shown in steps 307 and 308, the UE may be configured to perform the DL-PRS measurements from all gNBs; while each of the gNBs (including the serving gNB and the other relevant gNB(s)) may be configured to measure the corresponding UE SRS transmissions from the UE. Accordingly, the UE as well as the gNBs may be configured to report the respective measurement results (e.g., DL-PRS measurements for the UE and UE SRS measurements for the gNBs) to the LMF, as respectively shown in steps 309 and 311. Finally, upon receipt of such measurement reports, the LMF may be configured to determine the RTTs based on the UE and gNB Rx-Tx time difference measurements for each gNB for which corresponding UL and DL measurements were provided at steps 309 and 310; and to determine (e.g., calculate) the position of the UE accordingly.

As indicated above, in an NTN-based deployment, the network transmission points (e.g., TRPs) are typically moving, which would generally mean that timings between different gNBs as well as between gNB and UE would also be drifting. While the UE may be assumed to generally have a good understanding of the time of the serving cell, the understanding of neighboring satellites may be missing. At the same time, this (satellite) movement might also lead to potentially large Doppler shift (and Doppler drift when observing over longer time durations), which may in turn lead to the necessity of having measurement gaps for receiving data from cells on neighboring satellites. As a result, there appear to exist various challenges for multi-RTT with multiple satellites involved, as the UE would generally not know where to search and also would not have measurement gaps to search (note that it is generally not safe to assume that the UE would be able to measure on a neighboring satellite when performing operations towards the current serving satellite).

Therefore, for such NTN deployment, the above-illustrated (conventional) multi-NTT-based techniques would probably have to be modified or adapted such that RTT can be measured by the same gNB (satellite) at different points in time so that the satellite movement over time would be able to create measurement samples where the satellite's new position at different observation times would create different "location samples". Notably, if multiple satellites are available, such multiple satellites could also be measured and potentially "sampled" as a function of time in order to enhance the accuracy of the estimate and simplify the UE location estimation process.

In view thereof, the present disclosure generally seeks to propose techniques/mechanisms for use in supporting positioning (e.g., multi-RTT-based positioning) in NTNs, particularly in an efficient, flexible yet reliable manner.

In a broad sense, for the purpose of facilitating multi-RTT measurements, it is generally proposed to provide additional assistance information for a UE that requests or is configured to perform network verified UE location processes. Such additional assistance information may be expected to be provided by the LMF (possibly relayed via the corresponding serving gNB, or the like). As will be discussed in more detail below, such assistance information may comprise, among others, at least one of the following possible information/configurations, such as ephemeris information of the relevant satellites (e.g., of the serving and other suitable/relevant (neighboring) satellites), measurement gaps related configurations (e.g., in terms of time and/or duration) to perform the reception and transmission to the relevant satellites, information on the expected (e.g., estimated, assumed, theoretical, hypothetical, etc.) time-wise development of certain parameters (e.g., measurement gap configurations) associated to the assistance information or part thereof. For instance, some parameters in the assitance information may vary or change due to time-wise satellite movements and/or feeder link changes that are associated with the serving gNB and/or the further relevant gNBs. As can be understood and appreciated by the skilled person, some of the information/configurations may be determined (e.g., calculated) based on one or more other information/configurations, such that it/they may be omitted from the transmitted assistance information. Of course, any other suitable information or configuration may be comprised as well, in order to be able to facilitate the UE to perform necessary multi-RTT measurements. In some possible cases, the measurement gap related configurations may be provided to the relevant serving and/or further (neighboring) gNBs as well, such that those relevant gNBs would know (e.g., through proper calculation or the like, based on the measurement gap related configurations) when the UE would listening to and transmitting towards them.

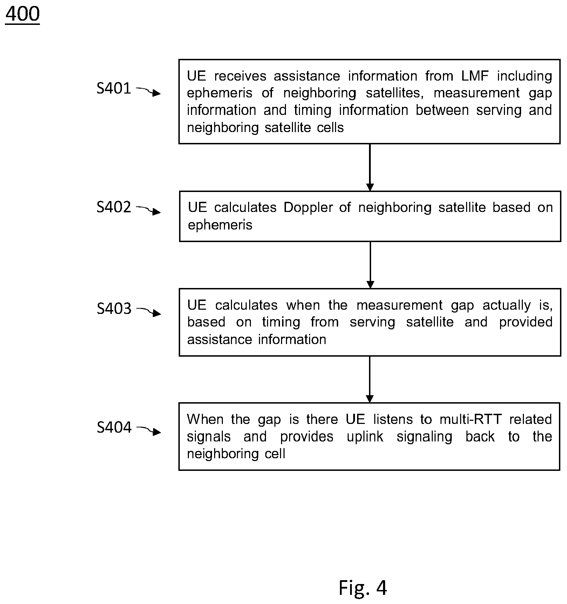

Now, reference is made to Figure 4, which schematically illustrates an example flow chart 400 of possible UE behaviors according to some example embodiments of the present disclosure. However, it may be worth mentioning that this exemplary flow chart as shown in Figure 4 is merely one possible implementation for the UE behaviors according to some example embodiments of the present disclosure, but should not be understood to constitute a limitation of any kind.

In particular, in step S401, the UE may be configured to receive assistance information from the LMF. As mentioned above, the assistance information may for example include, but is certainly limited thereto, at least one of: information indicative of the ephemeris of the relevant satellites (e.g., the serving satellite and/or the neighboring satellite(s)), measurement gap related information, timing information between serving and neighboring satellite cells, etc. Generally speaking, such assistance information may be understood to allow the UE to find the correct/exact timing for when (and possibly also the correct/exact frequency for where) to listen to the neighboring cell(s) which may be on a neighboring cell (satellite) different from the current serving cell (satellite).

As can be understood and appreciated by the skilled person, the assistance information as proposed in the present disclosure may be implemented as a separate new information element (IE) or may be embedded into (reuse) any suitable existing IE. An illustrative example only for purposes of ease of understanding (but certainly not as a limitation of any kind) of such suitable existing IE may for example be the "*NR-DL-PRS-AssistanceDataPerTRP-r16"* as specified in 3GPP TS 37.355. Certainly, any other suitable (new or existing) form or format for implementing such assistance information may be possible as well (possibly with suitable and appropriate update or adaptation, e.g., to include any suitable information that would be needed for the measurements for the serving cell and/or the relevant neighbor cell(s), if deemed necessary), depending on various circumstances and/or requirements. Incidentally, for ease of understanding, if the singaling/message flow chart 300 of Figure 3 were to be taken as an illustrative example, then generally speaking, the assistance information as proposed in the present disclosure may be communicated from the LMF to the UE (possibly via the serving gNB) in messages 2 (referenced as step 301), 3 and 3a, possibly with appropriated adaptation or update therefor.

In some possible implementations, the assistance information may contain a vector of (or a sequence/list of) time stamps, by which the UE would be expected to perform the DL PRS measurements needed for the Rx-Tx measurements as illustrated above. For instance, in some possible cases, such vector/list may contain the information (e.g., in slot and/or frame number, or the like) for the UE to conduct the measurements accordingly. As can be understood and appreciated by the skilled person, such timing information could be provided either with reference to the "serving cell time" or to the "relevant neighbor cell time", depending on various implementations. Accordingly, appropriate translation of the timing information may become necessary, in some possible cases.

In some possible implementations, there might be an additional set of information that would relate to the configured PRS for the measurements (or the like) in the assistance information, which would generally provide an associated measurement gap related configuration. Such measurement gap related configuration could be either implicit (e.g., by indicating a gap in slots and/or (sub-)frames prior to and/or after the existence of the PRS for the positioning measurements) or explicit (e.g., by indicating the exact start (sub-)frame and/or slot information, and possibly also a duration for which the UE would have to apply the measurement gap). It may be worth mentioning that such configured measurement gap would normally be configured/instructed from the LMF to the UE. But in some possible cases, some additional information for the serving gNB to know the exact measurement gaps might potentially also be needed to be conveyed to the UE, as will be understood and appreciated by the skilled person.

In some possible implementations, the assistance information may also be enhanced/extended with information on the points to measure with respect to the expected physical properties at the time of the measurement, which may include for instance satellite ephemeris information related to the satellite(s) providing the PRS, depending on various implementations and/or circumstances.

In some further possible implementations, the assistance information may yet comprise information indicative of (e.g., determined or estimated) time-wise development of the assistance information or part thereof. As an illustrative example but not as a limitation of any kind, such time-wise development information may comprise a plurality of (e.g., a list/sequence of) measurement gap related configurations resulting from time-wise satellite movements and/or feeder link changes that are associated with the serving gNB and/or the further relevant gNBs. As an illustrative (non-limiting) example, the sequence of measurement gap related configurations may comprise, instead of a constant duration as in regular cases, a first duration of 160 ms, a second duration of 150 ms (e.g., by taking the satellite movement and/or feeder link change into account), and so forth.

In summary, as will be understood and appreciated by the skilled person, the assistance information as proposed in the present disclosure may comprise any suitable information, as long as such assistance information would allow the UE to apply time wise configurations of the measurement points to perform the necessary UE RX-TX time difference measurements, time wise expected behaviors for the radio link(s) that is/are to be measured at the configured time instances, and/or associated measurement gaps that the UE would have to apply for performing the measurements.

Now returning to Figure 4, as exemplarily shown in step S402, the UE may be configured to, based on the received assistance information as illustrated above in detail (more specifically the satellite ephemeris information contained therein), calculate the corresponding Doppler frequency, so that the UE could know where to correctly or exactly listen to in the frequency domain. This Doppler frequency (or Doppler drift) may be calculated from the UE position and the satellite ephemeris. Particularly, it can be understood that the UE generally knows its own position (as this is needed for the UE to be able to successfully access the NTN system in the first place), but in some possible cases, the UE may have for some reason reported a wrong position (which is also one of the main reasons for which the whole network based verification of the UE position becomes necessary). It is to be noted that, in some possible implementations, such expected Doppler shift and/or Doppler drift (for the PRS for the measurement(s)) may be explicitly included in the assistance information instead, which would then be directly/explicitly communicated to the UE.

Then in step S403, the UE may be configured to determine (e.g., calculate) when the measurement gap actually is. Depending on various implementations and/or requirements, such determination of the timing for the measurement gap may for example be based on timing information from the serving cell/satellite, timing information of the relevant neighboring cell(s)/satellite(s) (which may be changing due to satellite movement), and suitable information provided in the assistance information (such as the offset/difference in timing between the serving satellite and the neighboring satellite(s), in some possible cases). Optionally, the UE may be further configured to determine (e.g., calculate) the timing back to the serving cell timing, if necessary (e.g., when the timing information is provided with reference to the neighboring cell(s)). In some further possible implementations, the ephemeris information (possibly also together with feeder link information) of the satellites may be used to perform such determination (calculation) of the measurement gap.

Finally, in step S404, the UE may be configured to use the above-determined result of the measurement gap (time and/or frequency) to perform the (regular) multi-RTT operation as illustrated earlier, which may include, among other things, listening to the multi-RTT related signals and providing the uplink signaling back to the neighboring cells, etc.

For the sake of completeness, it is nevertheless to be noted that, although in the above-illustrated example embodiments (with reference to the figures), the messages communicated/exchanged between the network nodes (e.g., LMF, gNBs, etc.) and the UE may appear to have specific/explicit names and/or contents comprised therein, depending on various implementations (e.g., the underlining technologies), such messages may have different names, contents and/or be communicated/exchanged in different forms/formats, as can be understood and appreciated by the skilled person.

According to some example embodiments, there are also provided corresponding methods suitable to be carried out by the apparatuses (network elements/components) as described above, such as the UE, the serving and/or neighboring network nodes (e.g., gNB, or the like), and/or the LMF. Particularly, it may be worth mentioning again that, it may generally be considered open relative to what time the LMF would provide the measurement gap related configurations to the UE. Moreover, such configurations may also be provided in the time of the cell in question (neighboring cell) or in the time of the serving cell. If it is in time of the neigboring cell, the serving cell could then need to translate the time for the UE to the serving cell, since the serving cell would also need to know when the gaps are there such it does not schedule the UE(s) there.

It should also be noted that the apparatus (or system) features described above correspond to respective method features that may however not be explicitly described, for reasons of conciseness. The disclosure of the present document is considered to extend also to such method features. In particular, the present disclosure is understood to relate to methods of operating the devices described above, and/or to providing and/or arranging respective elements of these devices.

Further, according to some further example embodiments, there is also provided a respective apparatus (e.g., implementing the UE, the (serving) network node, the LMF, etc., as described above) that comprises at least one processing circuitry, and at least one memory for storing instructions to be executed by the processing circuitry, wherein the at least one memory and the instructions are configured to, with the at least one processing circuitry, cause the respective apparatus to at least perform the respective steps as described above.

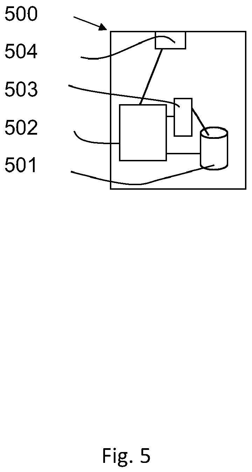

An illustrative (non-limiting) example for such an apparatus 500 is schematically shown in Figure 5. The apparatus 500 may be configured to implement a UE, a serving network node (cell), or a LMF as proposed in the present disclosure. In some possible cases, the apparatus 500 may also be implemented as any suitable network node/component/element for a communications system, for example, to be coupled to and/or for controlling a station of an access system, such as a RAN node, e.g. a base station, eNB or gNB, a relay node or a core network node such as an MME or S-GW or P-GW, or a core network function such as AMF, SMF, LMF, a server or host, or in some possible implementations, a UE. Depending on various implementations, the method as described in the present disclosure may be implemented in a single apparatus or across more than one apparatus. The apparatus may be integrated with or external to a node or module of a core network, RAN, or the like. In particular, the apparatus 500 may be arranged to provide control of communications in the service area of the system. The apparatus 500 may comprise at least one memory 501, at least one data processing unit (or circuitry) 502, 503, and an input/output interface 504. Via interface 504 the apparatus 500 may be coupled to any other suitable component (e.g., a receiver and/or a transmitter) of the apparatus 500, or to any other suitable other apparatus(es). In some possible examples, the receiver and/or the transmitter may be implemented as a radio front end or a remote radio head, depending on various implementations and/or circumstances.

Yet in some other example embodiments, there is provided a respective apparatus (e.g., implementing the UE, the network node, etc., as described above) that comprises respective means configured to at least perform the respective steps as described above.

It is to be noted that examples of embodiments of the disclosure are applicable to various different network configurations. In other words, the examples shown in the above described figures, which are used as a basis for the above discussed examples, are only illustrative and do not limit the present disclosure in any way. That is, additional further existing and proposed new functionalities available in a corresponding operating environment may be used in connection with examples of embodiments of the disclosure based on the principles defined.

It should also be noted that the disclosed example embodiments can be implemented in many ways using hardware and/or software configurations. For example, the disclosed embodiments may be implemented using dedicated hardware and/or hardware in association with software executable thereon. The components and/or elements in the figures are examples only and do not limit the scope of use or functionality of any hardware, software in combination with hardware, firmware, embedded logic component, or a combination of two or more such components implementing particular embodiments of the present disclosure.

It should further be noted that the description and drawings merely illustrate the principles of the present disclosure. Those skilled in the art will be able to implement various arrangements that, although not explicitly described or shown herein, embody the principles of the present disclosure and are included within its spirit and scope. Furthermore, all examples and embodiment outlined in the present disclosure are principally intended expressly to be only for explanatory purposes to help the reader in understanding the principles of the proposed method. Furthermore, all statements herein providing principles, aspects, and embodiments of the present disclosure, as well as specific examples thereof, are intended to encompass equivalents thereof.

## Claims

1. A user equipment, UE, served by a serving network node and configured for supporting multi-round trip time, RTT, -based positioning over non-terrestrial network, NTN, which involves the serving network node, at least one further network node relevant for the multi-RTT-based positioning and a location management function, LMF, the UE comprising:
at least one processor; and
at least one memory storing instructions that, when executed by the at least one processor, cause the UE at least to:
receive, from the LMF via the serving network node, assistance information for supporting the multi-RTT-based positioning, wherein the assistance information comprises ephemeris information related to the serving network node and to the further network node relevant for the multi-RTT-based positioning;
determine, based on the received assistance information, measurement gap for performing the multi-RTT related measurement; and
perform the multi-RTT related measurement for the serving network node and the further network node in accordance with the determined measurement gap and preferably report a result thereof to the LMF.

2. The UE according to claim 1, wherein the assistance information further comprises measurement gap related configuration, and the measurement gap for performing the multi-RTT related measurement is determined based on the measurement gap related configuration.

3. The UE according to claim 1 or 2, wherein the assistance information further comprises information indicative of time-wise development of the assistance information or part thereof.

4. The UE according to claim 3 when depending on claim 2, wherein the information indicative of time-wise development of the assistance information or part thereof comprises a plurality of measurement gap related configurations resulting from time-wise satellite movements and/or feeder link changes associated with the serving network node and/or the further network node.

5. The UE according to any one of the preceding claims, wherein the assistance information further comprises timing information indicative of a sequence of time instances at which the multi-RTT related measurement is to be expected to be performed by the UE.

6. The UE according to any one of the preceding claims, wherein the assistance information further comprises information related to position reference signal, PRS, for the multi-RTT related measurement.

7. The UE according to any one of the preceding claims, wherein the UE is further caused to:
determine a Doppler shift of the further network node based on the ephemeris information of the assistance information; and
wherein the measurement gap for performing multi-RTT related measurement is determined further based on the determined Doppler shift of the further network node.

8. The UE according to any one of the preceding claims, wherein the assistance information is sent from the LMF in a location positioning protocol, LPP, message.

9. A location management function, LMF, configured for supporting multi-round trip time, RTT, -based positioning over non-terrestrial network, NTN, which involves a serving network node serving a user equipment, UE and at least one further network node relevant for the multi-RTT-based positioning, the LMF comprising:
at least one processor; and
at least one memory storing instructions that, when executed by the at least one processor, cause the LMF at least to:
determine assistance information for supporting the multi-RTT-based positioning, wherein the assistance information comprises ephemeris information related to the serving network node and to the further network node relevant for the multi-RTT-based positioning;
send the assistance information to the UE via the serving network node.

10. The LMF according to claim 9, wherein the assistance information further comprises at least one of:
measurement gap related configuration for the UE to perform multi-RTT related measurement,
timing information indicative of a sequence of time instances at which the multi-RTT related measurement is to be expected to be performed by the UE,
information related to position reference signal, PRS, for the multi-RTT related measurement, or
information indicative of time-wise development of the assistance information or part thereof.

11. The network node according to claim 9 or 10, wherein the assistance information is sent in a location positioning protocol, LPP, message.

12. A method of a user equipment, UE, served by a serving network node and configured for supporting multi-round trip time, RTT, -based positioning over non-terrestrial network, NTN, which involves the serving network node, at least one further network node relevant for the multi-RTT-based positioning and a location management function, LMF, the method comprising:
receiving, from the LMF via the serving network node, assistance information for supporting the multi-RTT-based positioning, wherein the assistance information comprises ephemeris information related to the serving network node and to the further network node relevant for the multi-RTT-based positioning;
determining, based on the received assistance information, measurement gap for performing multi-RTT related measurement; and
performing the multi-RTT related measurement for the serving network node and the further network node in accordance with the determined measurement gap and preferably reporting a result thereof to the LMF.

13. A method of a location management function, LMF, configured for supporting multi-round trip time, RTT, -based positioning over non-terrestrial network, NTN, which involves a serving network node serving a user equipment, UE and at least one further network node relevant for the multi-RTT-based positioning, the method comprising:
determining assistance information for supporting the multi-RTT-based positioning, wherein the assistance information comprises ephemeris information related to the serving network node and to the further network node relevant for the multi-RTT-based positioning; and
sending the assistance information to the UE via the serving network node.

14. A computer program comprising instructions for causing an apparatus to perform the method according to claim 12 or 13.

15. A memory storing computer readable instructions for causing an apparatus to perform the method according to claim 12 or 13.
